# EUROPEAN PATENT SPECIFICATION

(11) **EP 4 238 847 B1**
(45) Date of publication and mention of the grant of the patent: **18.03.2026**
(21) Application number: 21884516.2
(22) Date of filing: 22.07.2021
(51) Int. Cl.: B61D 15/06, B61F 19/04, B61G 11/16

(54) **VEHICLE BODY COLLISION ENERGY ABSORPTION STRUCTURE AND RAIL VEHICLE**
STRUKTUR ZUR ABSORPTION VON FAHRZEUGKAROSSERIEKOLLISIONSENERGIE UND SCHIENENFAHRZEUG
STRUCTURE D'ABSORPTION D'ÉNERGIE DE COLLISION DE CARROSSERIE DE VÉHICULE ET VÉHICULE FERROVIAIRE

(30) Priority: 27.10.2020 CN 202011167324
(43) Date of publication of application: 06.09.2023
(73) Proprietor: CRRC QINGDAO SIFANG CO., LTD., Qingdao, Shandong 266111 (CN)
(72) Inventor: LIN, Peng, Qingdao, Shandong 266111 (CN); JIANG, Xin, Qingdao, Shandong 266111 (CN); TIAN, Honglei, Qingdao, Shandong 266111 (CN); YANG, Zeyun, Qingdao, Shandong 266111 (CN); SHANG, Keming, Qingdao, Shandong 266111 (CN); CHE, Quanwei, Qingdao, Shandong 266111 (CN); GU, Lixiang, Qingdao, Shandong 266111 (CN); JIANG, Liang, Qingdao, Shandong 266111 (CN); DONG, Xiao, Qingdao, Shandong 266111 (CN); WANG, Xiaojie, Qingdao, Shandong 266111 (CN)
(74) Representative: Winter, Brandl - Partnerschaft mbB
(86) International application number: PCT/CN2021/107798
(87) International publication number: WO 2022/088780

(56) References cited:
- EP-A1- 0 888 946
- EP-A1- 1 215 098
- EP-A1- 1 930 226
- EP-A2- 0 858 937
- WO-A1-2010/029188
- CN-A- 103 101 553
- CN-A- 103 625 502
- CN-A- 107 472 285
- CN-A- 107 901 942
- CN-A- 107 901 942
- CN-A- 112 298 259
- CN-U- 208 746 012
- DE-A1- 102006 044 397

## Description

### CROSS-REFERENCE TO RELATED APPLICATION

The present application claims priority to Chinese Patent Application No. 202011167324.6, filed on October 27, 2020, entitled "Vehicle Body Collision Energy Absorption Structure and Rail Vehicle".

### TECHNICAL FIELD

The present application relates to the field of rail vehicle passive safety, in particular to a vehicle body collision energy absorbing structure and a rail vehicle.

### BACKGROUND

Traditional urban rail vehicle body and energy absorbing structure only meet requirements for the safety of collision at a speed of 25 km/h. With the continuous increase in travelling speeds of urban rail vehicles, the requirements for the safety of collision are getting higher and higher. The travelling speed of urban rail vehicles for suburban railway has reached more than 140 km/h, which is comparable to that of powered car train-set for intercity railway. Thus, the demand for the safety of collision is greatly improved compared with ordinary urban rail vehicles.

However, if the collision energy absorbing structure of the powered car train-set is directly used for the urban rail vehicles, although requirements for safety of collision of a 36 km/h level can be met, it is required to increase the strength of the vehicle body to 1500kN, which increase the production cost of the vehicle body. In addition, a coupler needs a coupler head meeting higher requirements for collision, which fails to be coupled with a coupler head of a traditional urban rail vehicle, and the traditional urban rail vehicle cannot withstand the impact from the energy absorbing structure of the powered car train-set during party-line operation.

How to improve the safety performance for vehicle collision under the premise of unchanging urban rail vehicle platform, reach the design goal that the strengths (compressive strength of 1200 kN) of the vehicle body and the coupler are the same as that of the traditional urban rail vehicle, and increase the collision safety speed to 36 km/h are urgent problems to be solved.

DE 10 2006 044397 A1 discloses a head module for a rail vehicle with a safety cell for the driver, which comprises a frontal structure, a rear structure spaced apart in the longitudinal direction of the rail vehicle and a lateral framework structure on each of the two longitudinal sides of the rail vehicle, wherein the frontal structure extends in the central region of the rail vehicle in the direction of the vertical axis of the rail vehicle up to the height range defined by the lower edge of the windscreen of the rail vehicle, and the respective lateral framework structure supports the frontal structure against the rear second structure in the event of a crash, and wherein the frontal structure comprises a column element on each of the two longitudinal sides of the rail vehicle, which extends in the direction of the vertical axis of the rail vehicle over the lower edge of the extends beyond the front window, and the respective column element is rigidly supported in the region of its upper end against the rear second structure by the associated lateral truss structure in the event of a crash.

CN 107 901 942 A discloses a method for designing the train body anti-collision performance of a long-numbered motor train unit with the speed per hour of 350 kilometers. The method includes three parts of head vehicle energy absorption design, middle vehicle energy absorption design and energy absorption design of each collision interface. According to the method, energy absorption elements are adopted to finish the energy dissipation process step by step in a controllable mode, the requirement of static strength of a train body, the available space of a head vehicle, the influence of the minimum compression amount of air dampers of middle vehicles on the energy absorption elements and the designed energy absorption amount of each the collision interface are fully considered, and the EN15227 standard requirement is met after one-dimensional simulated analysis validation.

EP 1 215 098 A1 discloses a railway vehicle comprising a rigid chassis extending under the driver's cab. It comprises a protection shield, located in front of the cab, provided with a rigid structure. The shield rests on the chassis and is connected to it by an energy-absorbing element interposed between it and the chassis.

### SUMMARY

The embodiments of the present application provide a vehicle body collision energy absorbing structure, which solves the problems that how to improve the safety performance for vehicle collision under the premise of unchanging urban rail vehicle platform, reach the design goal that the strengths (compressive strength of 1200 kN) of the vehicle body and the coupler are the same as that of the traditional urban rail vehicle, and increase the collision safety speed to 36 km/h.

The embodiments of the present application further provide a rail vehicle.

The invention is set out in the appended set of claims.

In the vehicle body collision energy absorbing structure according to the embodiments of the present application, the side of the front-end energy absorbing module deviating towards the center line of the vehicle body is mounted on the hermetic partition wall. When two trains collide, the front-end energy absorbing modules of the two trains are reversely symmetrical, two front-end energy absorbing modules are in contact with vehicle heads of trains to absorb energy. For example, it is like that two front-end energy absorbing modules are connected in parallel, carrying the compression strength of the two front-end energy absorbing modules, which has a high collision energy absorbing efficiency. The present application solves the problem that a pair of front-end energy absorbing modules on one train and a pair of front-end energy absorbing modules on another train need to be aligned when two trains collide, which is prone to tilting the front-end energy absorbing module, resulting in a significant reduction in energy absorbing efficiency. The present application further solves the problem of a significant impact on lightweight target of the vehicle caused by arranging an anti-deviation mechanism with a strong guiding device inside the front-end energy absorbing module to correct the structural instability during the collision. Since the front-end energy absorbing module according to the embodiments of the present application does not need an anti-deviation mechanism with a strong guiding device, the lightweight target of the vehicle is realized, and the structural strength requirements for the hermetic partition wall are reduced, for example, it does not need too much additional reinforcement structure. By arranging the middle shearing coupler, the anti-climber is used for preventing the vehicle from climbing after the middle shearing coupler is cut off during a collision, and the anti-climber and the middle energy absorbing module are continuously deformed to absorb energy, which can, in combination with the front-end energy absorbing module, improve the vehicle collision safety performance under the premise of unchanging urban rail vehicle platform, realize that the strengths (compression strength of 1200 kN) of the vehicle body and the coupler are the same as that of the traditional urban rail vehicle, and increase the collision safety speed to 36 km/h.

The optimization and improvement for the vehicle body structure in the embodiments of the present application are local optimization based on the urban rail vehicle body platform in the related art. The platform in the related art can be used to effectively control the manufacturing cost and research and development cycle of the vehicle body.

Since only one front-end energy absorbing module is mounted for each train, the design that two front-end energy absorbing modules mounted symmetrically need to be strictly aligned is avoided, thus improving the efficiency of product design.

### BRIEF DESCRIPTION OF DRAWINGS

In order to clearly illustrate the solutions according to the present application or the related art, the accompanying drawings used in the description of the embodiments of the present application or the related art are briefly introduced below. It should be noted that the drawings in the following description are only part embodiments of the present application. For those of ordinary skill in the art, other drawings can be obtained according to these drawings without creative efforts.
FIG. 1 is a structural schematic diagram showing that a front-end collision energy absorbing structure is mounted on a vehicle head according to an embodiment of the present application;
FIG. 2 is a side structural schematic diagram of FIG. 1;
FIG. 3 is a schematic perspective view of the front-end collision energy- absorbing structure of FIG.1;
FIG. 4 is a schematic perspective view showing that a middle-end collision energy absorbing structure is mounted on a middle carriage according to an embodiment of the present application;
FIG. 5 is a schematic diagram of a connection relation between a stop beam and a traction beam according to an embodiment of the present application;
FIG. 6 is a schematic perspective view of a middle anti-climber according to an embodiment of the present application;
FIG. 7 is a schematic comparative diagram of a structure with a front-end floor and a structure and without the front-end floor.

### Reference numerals:

1: front-end coupler; 2: front-end anti-climber; 3: front-end energy absorbing module; 4: hermetic partition wall; 5: traction beam and buffer beam assembly; 6: anti-climbing energy absorbing installation structure assembly; 7: coupler installation structure assembly; 8: upper surface of underframe; 9: vehicle head; 10: middle shearing coupler; 11: middle energy absorbing module; 12: middle anti-climber; 13: drainage tube; 14: middle carriage; 15: stop beam; 16: traction beam; 17: reinforcing rib of the front-end energy absorbing module; 18: front-end floor; 19: guide rod.

### DETAILED DESCRIPTION OF THE EMBODIMENTS

In order to make the objectives, solutions and advantages of the embodiments of the present application clearer, the solutions according to the embodiments of the present application are clearly and completely described below. It should be noted that the embodiments described below are a part of the embodiments of the present application, but not all the embodiments.

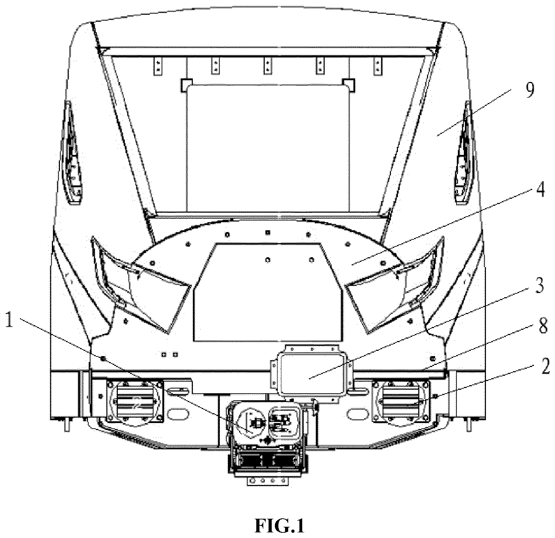

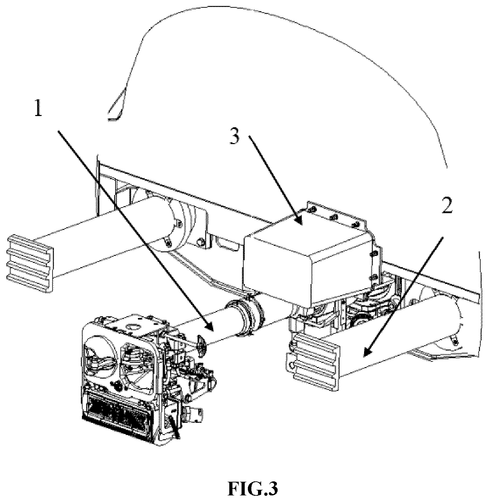

A vehicle body collision energy absorbing structure according to the embodiments of the present application is described combining with FIG. 1 to FIG. 5 as follow.

The vehicle body collision energy absorbing structure according to the embodiments of the present application includes a front-end collision energy absorbing structure mounted at a front end of a head carriage (i.e. vehicle head 9), and a middle-end collision energy absorbing structure mounted at an end of a middle carriage 14.

As shown in FIG. 1 to FIG. 3, the front-end collision energy absorbing structure includes a hermetic partition wall 4, a front-end coupler 1 and a pair of front-end anti-climbers 2.

The hermetic partition wall 4 is connected to both a cab skeleton and a skin, the skin is covered on the cab skeleton, and the hermetic partition wall 4 is fixedly arranged in the cab skeleton and connected to the skin. The front-end coupler 1 is arranged below the hermetic partition wall 4 and along a center line of a vehicle body. The pair of front-end anti-climbers 2 are symmetrically distributed on both sides of the center line of the vehicle body and located below the hermetic partition wall 4.

Further, the front-end collision energy absorbing structure further includes a single front-end energy absorbing module 3, and a side of the front-end energy absorbing module 3 deviating towards the center line of the vehicle body is mounted on the hermetic partition wall 4. By mounting the side of the front-end energy absorbing module 3 deviating towards the center line of the vehicle body on the hermetic partition wall 4, the front-end energy absorbing modules 3 of the two trains are reversely symmetrical when two trains collide, two front-end energy absorbing modules 3 are in contact with vehicle heads 9 of trains respectively to absorb energy. For example, it is like that two front-end energy absorbing modules 3 are connected in parallel, carrying the compression strength of the two front-end energy absorbing modules 3, which has a high collision energy absorbing efficiency. The present application solves the problem that a pair of front-end energy absorbing modules 3 on one train and a pair of front-end energy absorbing modules 3 on another train need to be aligned when two trains collide, which is prone to tilting the front-end energy absorbing module 3, resulting in a significant reduction in energy absorbing efficiency. The present application further solves the problem of a significant impact on lightweight target of the vehicle caused by arranging an anti-deviation mechanism with a strong guiding device inside the front-end energy absorbing module 3 to correct the structural instability during the collision. Since the front-end energy absorbing module 3 according to the embodiments of the present application does not need an anti-deviation mechanism with a strong guiding device, the lightweight target of the vehicle is realized, and the structural strength requirements for the hermetic partition wall 4 are reduced, for example, it does not need too much additional reinforcement structure.

Since only one front-end energy absorbing module 3 is arranged for each train, the design that two front-end energy absorbing modules 3 mounted symmetrically need to be strictly aligned is avoided, thus improving the efficiency of product design.

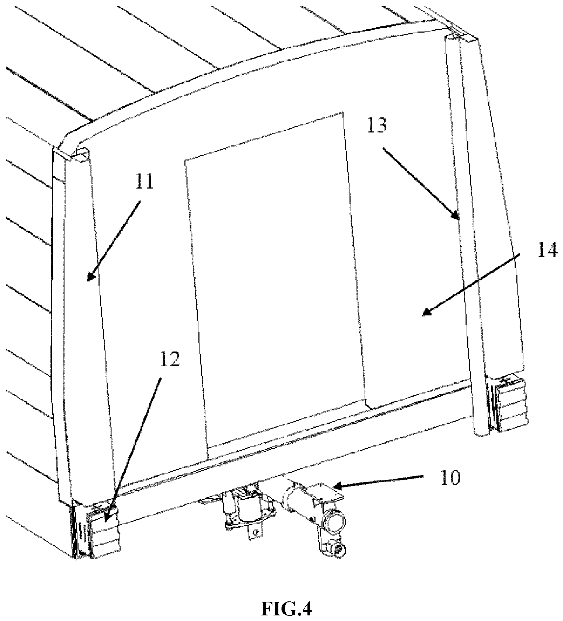

In the present embodiment, as shown in FIG. 4, the middle-end collision energy absorbing structure includes a middle shearing coupler 10 mounted below an underframe, middle energy absorbing modules 11 mounted on both sides of an end wall of the middle carriage 14, and a middle anti-climber 12 mounted at a position corresponding to a side beam and below the middle energy absorbing modules, where a length of each of the middle energy absorbing modules extends along a height direction of the end wall to make full use of the space of the end wall, and the length of the middle energy absorbing module 11 can be consistent with the height of the end wall, as such, the space utilization rate is high and middle energy absorbing module 11 has large efficient energy absorbing area.

The middle energy absorbing module 11 may be symmetrically arranged on both sides of the end wall. The middle anti-climber 12 is arranged under the middle energy absorbing module 11 in a one-to-one correspondence manner, and a pair of middle anti-climbers 12 are also symmetrically arranged at the end of the middle carriage 14.

Under normal circumstances, a middle coupler buffer and a collapse tube are not cut off after a travel is completed, which plays a role in preventing the vehicle from climbing, but the energy absorbing space of a vehicle end is unable be fully utilized. In the present embodiment, a middle shearing coupler 10 is adopted, the middle anti-climber 12 prevents the vehicle from climbing after the coupler is cut off, and the middle anti-climber 12 and the middle energy absorbing module 11 are continuously deformed to absorb energy, which can, in combination with the front-end energy absorbing module, improve the vehicle collision safety performance under the premise of unchanging urban rail vehicle platform, realize that the strengths (compression strength of 1200 kN) of the vehicle body and the coupler are the same as that of the traditional urban rail vehicle, and increase the collision safety speed to 36 km/h. The optimization and improvement for the vehicle body structure in the embodiments of the present application are local optimization based on the urban rail vehicle body platform. The platform in the related art can be used for effectively control the manufacturing cost and research and development cycle of the vehicle body.

In an embodiment, referring to FIG. 4, the middle energy absorbing modules 11 are disposed on the end wall of the middle carriage 14 and are located on two sides of the outside (or inside) of a through passage. The arrangement of the middle energy absorbing modules 11 would not affect the movement of the through passage, and the inner or inner side of the middle energy absorbing modules 11 can be further provided with a drainage tube 13, such as an eaves drainage tube, to facilitate the arrangement of the drainage tube 13. The "inner side" mentioned here is based on a width direction of the vehicle body. The side of middle energy absorbing modules 11 proximal to the center line of the vehicle body is referred to as the inner side, and the side of the middle energy absorbing modules 11 distal to the center line of the vehicle body is referred to as an outer side. As shown in FIG. 4, the drainage tube 13 is disposed at the inner side of the middle energy absorbing modules 11. For the case where the drainage tube 13 is disposed at the inner side of the middle energy absorbing modules 11, the drainage tube 13 cannot be seen from the outside of the middle energy absorbing modules 11. The layout of the drainage tube 13 is secretive and saves the end space.

The middle energy absorbing modules 11 in the present embodiment are mounted on the end wall and are attached to the side wall. Under the high strength of the side wall, the impact force during the collision is conducted through the side wall, which can effectively avoid the deformation of the end wall and the damage of end devices in the vehicle.

The middle energy absorbing modules 11 include an aluminum honeycomb and an aluminum plate coated outside the aluminum honeycomb, which can adopt conventional structure of simple structure and low cost.

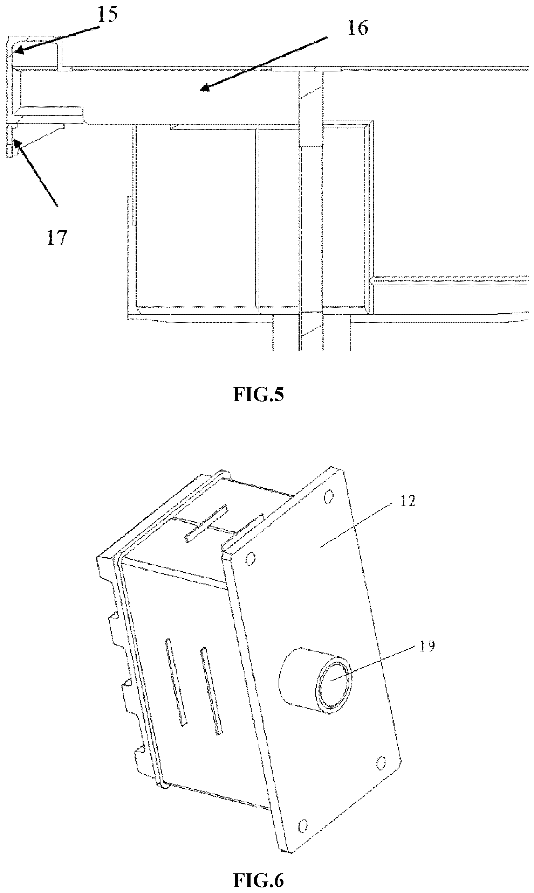

Further, as shown in FIG. 6, the middle anti-climber 12 adopts a biased guide rod, which can avoid a side beam profile while playing a guiding role, simplify the installation structure of the vehicle body, and ensure the sealing effect of the side beam profile.

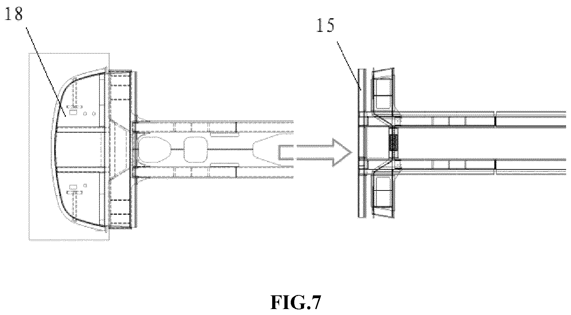

After a collision speed is increased, the collision energy at one end of the head carriage is greatly increased. In order to meet the collision deformation and energy absorbing requirements, the front end structure of the head carriage needs to be optimized and improved. As shown in FIG. 5, the front end of the head carriage is provided with a stop beam 15. The stop beam 15 is used as a main carrying structure of the front-end energy absorbing module. A front end of a traction beam 16 on the underframe extends to be connected to the stop beam 15 to improve the strength of the stop beam 15. A lower part of the stop beam 15 is provided with reinforcing ribs of the front-end energy absorbing module 17 to further improve the strength of the front-end energy absorbing module. As shown in FIG. 7, no front-end floor 18 is provided on the front end of the stop beam 15. In related art, a front-end floor 18 is located at the collision deformation area of the anti-climber and the front-end energy absorbing module. Since the arrangement of the front-end floor 18 would affect the deformation operation of the energy absorbing structure during the collision process, no front-end floor 18 is disposed. The vehicle body is sealed through a head guard and the hermetic partition wall 4, thereby providing more installation and deformation space for the energy absorbing structure.

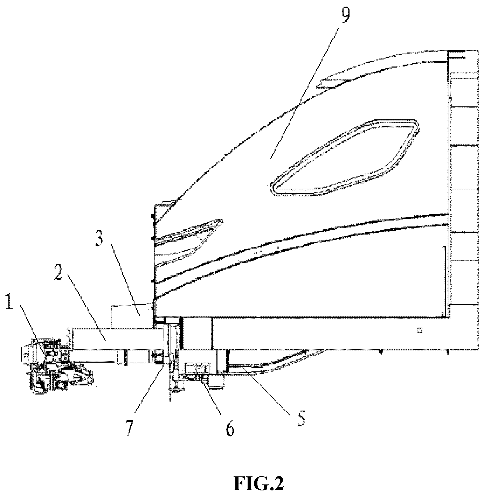

As shown in FIG. 1 and FIG. 2, along a direction of the center line of the vehicle body, a front end of the front-end coupler 1, a front end of the front-end anti-climber 2 and a front end of the front-end energy absorbing module 3 are staggered to absorb energy step by step. In the present embodiment, from first to last, the energy absorbing order starts from the front-end coupler 1, the front-end anti-climber 2 to the front-end energy absorbing module 3.

The front-end coupler 1 is mainly composed of a coupler body, a coupler head, a coupler buffer, a coupler collapse tube, a coupler seat, a rotating center, a rubber carrying, a connecting bolt, an electric hook and so on. In an embodiment, the front-end coupler 1 of the present embodiment may adopt traditional front-end coupler 1.

The front-end anti-climber 2 may be a cutting front-end anti-climber 2, which consists of an anti-climbing teeth, a guiding tube mounting seat, a cutter and other parts. The front-end anti-climber 2 is a strong guiding device with good deflection resistance. The working load of the front-end anti-climber 2 may be 650 KN. In addition, the front-end anti-climber 2 is not limited to cutting anti-climbing energy absorption, but also can be a vehicle-end front-end anti-climber 2 with anti-climbing ability in various energy absorbing forms such as collapse, expanding, and shrinking.

The front-end energy absorbing module 3 according to the present embodiment has good lightweight performance and very good longitudinal energy absorbing characteristics.

The hermetic partition wall 4 (also known as hermetic rigid wall) according to the present embodiment can be an aluminum alloy plate structure with a thickness of 20 mm to prevent the front-end energy absorbing device from invading during a collision process. In the present embodiment, the part behind the hermetic partition wall 4 (a cab and a passenger room area) is a non-deformable area, and the part in front of the hermetic partition wall 4 is the main energy absorbing area. Therefore, the hermetic partition wall 4 is the main structure for dividing the deformation and non-deformation functional areas. In addition, the part behind the hermetic partition wall 4 (passenger room) is partially reinforced by the "L"-shaped profile, which provides a larger longitudinal carrying area for the front-end energy absorbing module 3 and transfers the load along the underframe.

According to an embodiment of the present application, the cab skeleton and the hermetic partition wall 4 are mounted on the underframe. In order to reasonably arrange the position of the front-end energy absorbing module 3 to provide the optimal energy absorbing effect, in a vertical height direction of the vehicle body, the front-end energy absorbing module 3 is symmetrically mounted with an upper surface of the underframe 8 as a center line or has a given offset relative to the upper surface of the underframe 8. For example, the front-end energy absorbing module 3 may be disposed symmetrically (or slightly offset) relative to the upper surface of the underframe 8.

According to an embodiment of the present application, the front-end energy absorbing module 3 includes a housing, a back plate and an energy absorbing inner core mounted in the housing and abutted against the back plate, where the front-end energy absorbing module 3 is mounted on the hermetic partition wall 4 through the back plate. The back plate is connected to the hermetic partition wall 4 by bolts, which is easy to mount. During the collision, the energy absorbing inner core collapses and absorbs energy, and the housing can protect and guide the energy absorbing inner core.

According to an embodiment of the present application, the offset of the front-end energy absorbing module 3 relative to the upper surface of the underframe 8 is less than or equal to 20% of a height of the back plate to ensure that the front-end energy absorbing module 3 is basically kept at the center position of the upper surface of the underframe 8 to have a good stability during absorbing energy.

According to an embodiment of the present application, a circumference of the housing has a taper angle, and the taper angle gradually decreases from a side of the back plate to a front end of the housing, and the taper angle is smaller or equal to 5 degrees to ensure the slow increase in the collision impact load. The compression load level is in the range of 350 KN to 450 KN to prevent excessive instantaneous impact load on the vehicle body.

According to an embodiment of the present application, the energy absorbing inner core is a honeycomb core, and an axis direction of the honeycomb core is parallel or orthogonal to a travelling direction of the vehicle body. The energy absorbing inner core may also adopt metal lattice, negative Poisson ratio and other structural types of energy absorbing devices.

According to an embodiment of the present application, a mounting end of the front-end coupler 1, a mounting end of the front-end anti-climber 2 and a mounting end of the front-end energy absorbing module 3 are not in the same mounting plane. The energy absorption process of the vehicle end in the present application mainly includes three stages. A first stage is the energy absorbing process of the coupler buffer and the collapse tube. The second stage is the energy absorbing process dominated by the front-end anti-climber 2. The third stage is the energy absorbing process in which both the front-end anti-climber 2 and the front-end energy absorbing module 3 participate together. In the vehicle-end energy absorbing structure, effective energy absorption is mainly implemented through the coordinated action among the front-end coupler 1, the front-end anti-climber 2 and the front-end energy absorbing module 3. In order to ensure the matching relation between the energy absorbing processes, as shown in FIG. 2, mounting points (mounting ends) of the front-end coupler 1, the front-end anti-climber 2 and the front-end energy absorbing module 3 are not on the same plane. The displacement of the front-end coupler 1 and the front-end anti-climber 2 in a longitudinal direction makes the front-end anti-climber 2 cloud normally act if overload protection occurs. The displacement of the front-end anti-climber 2 and the front-end energy absorbing module 3 at the installation position is a suitable value converted based on its own effective compression stroke.

According to an embodiment of the present application, the lower part of the underframe is provided with a traction beam and buffer beam assembly 5, and the front-end anti-climber 2 is connected to the traction beam and buffer beam assembly 5 through an anti-climbing energy absorbing installation structure assembly 6. The front-end coupler 1 is connected to the traction beam and buffer beam assembly 5 through a coupler installation structure assembly 7.

In an embodiment, the traction beam and buffer beam assembly 5 includes a traction beam and a buffer beam orthogonally connected with the traction beam.

In an embodiment, the anti-climbing energy absorbing installation structure assembly 6 is a box-type carrying structure formed by assembling and welding aluminum plates, and is symmetrically mounted on both sides of the traction beam and connected with the traction beam and a side beam of the vehicle body. The box-type carrying structure is embedded with vertical aluminum alloy plates to ensure that the structure has sufficient carrying capacity.

In an embodiment, the traction beam and buffer beam assembly 5 is a set of aluminum alloy frame carrying device. A traction beam part and a buffer beam part are orthogonally distributed. The traction beam consists of two symmetrically distributed variable cross-section aluminum alloy profiles disposed at intervals, and is disposed perpendicular to the hermetic partition wall 4. The traction beam is a main force point for the longitudinal carrying of the hermetic partition wall 4. The buffer beam is an aluminum alloy profile with equal section and is disposed in parallel to the hermetic partition wall 4, and the height direction of the buffer beam is basically consistent with an upper surface of above the traction beam. The traction beam and buffer beam assembly 5 is a main path carrying mechanism for longitudinal load transmission of the front-end coupler 1, the front-end anti-climber 2 and the front-end energy absorbing module 3.

In an embodiment, the front-end anti-climber 2 and the anti-climbing energy absorbing installation structure assembly 6 are connected by bolts.

According to an embodiment of the present application, the coupler installation structure assembly 7 includes a connecting plate and a reinforcing plate integrated with the connecting plate by resistance welding. A middle part of the connecting plate is provided with a hole through which the front-end coupler 1 passes. The arrangement of the hole is intended first to reduce structural weight and second to enable the main structure of the front-end coupler 1 do not interfere with other energy absorbing devices after the main structure of the front-end coupler 1 passes the hole and complete a normal retreat, where the front-end coupler 1 is a device with overload protection capability, and when the front-end coupler 1 reaches a preset load, a shear and retreat occur. The coupler installation structure assembly 7 is connected to the traction beam through the connecting plate to complete the installation positioning of the coupler installation structure assembly 7. The front-end coupler 1 is connected to the coupler installation structure assembly 7 connected at the rear end of the front-end coupler 1 through bolts.

An embodiment of the present application provides a rail vehicle, which includes a vehicle body and the vehicle body collision energy absorbing structure as described above mounted at a head end of the vehicle body. In two rail vehicles travelling in opposite directions, the front-end energy absorbing modules 3 of the two rail vehicles are located on the same side towards a driving direction of the rail vehicle respectively. For example, the two front-end energy absorbing modules 3 are mounted anti-symmetrically. When two trains collide, the front-end energy absorbing modules 3 of the two trains are reversely symmetrical, two front-end energy absorbing modules 3 are in contact with vehicle heads 9 of trains to absorb energy. For example, it is like that two front-end energy absorbing modules 3 are connected in parallel, carrying the compression strength of the two front-end energy absorbing modules 3, which has a high collision energy absorbing efficiency. The middle anti-climber 12 is used to prevent the vehicle from climbing after the middle shearing coupler 10 is sheared, and the middle anti-climber 12 and the middle energy absorbing module 11 are continuously deformed to absorb energy, which can, in combination with the front-end energy absorbing module, improve the vehicle collision safety performance under the premise of unchanging urban rail vehicle platform, realize that the strengths (compression strength of 1200kN) of the vehicle body and the coupler are the same as that of the traditional urban rail vehicle, and increase the collision safety speed to 36 km/h.

## Claims

1. A rail vehicle body collision energy absorbing structure, comprising:
a front-end collision energy absorbing structure suitable for being mounted at a front end of a head carriage of the rail vehicle, and a middle-end collision energy absorbing structure suitable for being mounted at an end of a middle carriage (14) of the rail vehicle,
wherein the front-end collision energy absorbing structure consists of a hermetic partition wall (4) suitable for being connected to both a cab skeleton and a skin of the head carriage, a front-end coupler (1) to be arranged below the hermetic partition wall (4) along a center line of the vehicle body, front-end anti-climbers (2) to be symmetrically distributed on both sides of the center line of the vehicle body and located below the hermetic partition wall (4), and a front-end energy absorbing module (3), wherein the front-end energy absorbing module (3) is mounted on the hermetic partition wall (4) in a manner of biasing to a side of the center line of the vehicle body; and
wherein the middle-end collision energy absorbing structure includes a middle shearing coupler (10) suitable for being mounted below an underframe of the middle carriage, middle energy absorbing modules (11) suitable for being mounted on both sides of an end wall of the middle carriage (14), and a middle anti-climber (12) suitable for being mounted at a position corresponding to a side beam and below the middle energy absorbing modules (11), wherein a length of each of the middle energy absorbing modules (11) is configured to extend along a height direction of the end wall.

2. The vehicle body collision energy absorbing structure of claim 1, wherein along a direction of the center line of the vehicle body, a front end of the front-end coupler (1), a front end of the front-end anti-climber (2) and a front end of the front-end energy absorbing module (3) are configured to be staggered; the cab skeleton and the hermetic partition wall (4) are suitable for being mounted on the underframe; and in a vertical height direction of the vehicle body, the front-end energy absorbing module (3) is symmetrically mounted with an upper surface of the underframe as a center plane or has a given offset relative to the upper surface of the underframe.

3. The vehicle body collision energy absorbing structure of claim 2, wherein the front-end energy absorbing module (3) includes a housing, a back plate and an energy absorbing inner core mounted in the housing and abutted against the back plate, wherein the front-end energy absorbing module (3) is mounted on the hermetic partition wall (4) through the back plate.

4. The vehicle body collision energy absorbing structure of claim 3, wherein the offset of the front-end energy absorbing module (3) relative to the upper surface of the underframe is less than or equal to 20% of a height of the back plate, and the back plate is connected to the hermetic partition wall (4) by bolts.

5. The vehicle body collision energy absorbing structure of claim 3, wherein a circumference of the housing has a taper angle, and the taper angle gradually decreases from a side of the back plate to a front end of the housing, and the taper angle is smaller or equal to 5 degrees.

6. The vehicle body collision energy absorbing structure of claim 3, wherein the energy absorbing inner core is a honeycomb core, and an axis direction of the honeycomb core is intended to be parallel or orthogonal to a travelling direction of the vehicle body.

7. The vehicle body collision energy absorbing structure of any one of claims 1 to 6, wherein a mounting end of the front-end coupler (1), a mounting end of the front-end anti-climber (2) and a mounting end of the front-end energy absorbing module (3) are not in the same mounting plane.

8. The vehicle body collision energy absorbing structure of any one of claims 1 to 6, wherein the middle energy absorbing modules (11) are suitable for being mounted on the end wall of the middle carriage (14) and for being located on both sides outside a through passage, and each of the middle energy absorbing modules (11) includes an aluminum honeycomb and an aluminum plate coated outside the aluminum honeycomb; and
an inner or inner side of the middle energy absorbing module (11) is provided with a drainage tube.

9. The vehicle body collision energy absorbing structure of any one of claims 1 to 6, wherein the middle anti-climber (12) is provided with a guide rod, and an axis of the guide rod deviates from a center line of the middle anti-climber (12).

10. A rail vehicle having a head carriage and a middle carriage (14),
the head carriage comprising an underframe, a cab with a cab skeleton and a skin,
the middle carriage comprising an underframe and an end wall,
the rail vehicle comprising a vehicle body and the vehicle body collision energy absorbing structure of any one of claims 1 to 9 mounted on the vehicle body,
wherein in case that two rail vehicles travelling in opposite directions, the front-end energy absorbing module (3) of each of the two rail vehicles is located on the same side towards a driving direction of the rail vehicle.

11. The rail vehicle of claim 10, wherein a front end of the head carriage is provided with a stop beam (15), a front end of a traction beam (16) on the underframe extends to be connected to the stop beam (15), a lower part of the stop beam (15) is provided with reinforcing ribs of the front-end energy absorbing module (3), and no front-end floor is provided on a front end of the stop beam (15).

## Patentansprüche

1. Fahrzeugkarosserie-Kollisionsenergieabsorptionsstruktur mit
einer Frontend-Kollisionsenergieabsorptionsstruktur, die zum Anbringen an einem vorderen Ende eines Kopfwagens des Schienenfahrzeugs geeignet ist, und einer Mittenend-Kollisionsenergieabsorptionsstruktur, die zum Anbringen an einem Ende eines Mittelwagens (14) des Schienenfahrzeugs geeignet ist,
wobei die Frontend-Kollisionsenergieabsorptionsstruktur aus einer hermetischen Trennwand (4), die zum Verbinden sowohl mit einem Fahrerhausskelett als auch mit einer Außenhaut des Kopfwagens geeignet ist, einer Frontend-Kupplung (1), die unterhalb der hermetischen Trennwand (4) entlang einer Mittellinie der Fahrzeugkarosserie angeordnet ist, Frontend-Aufstiegssicherungen (2), die symmetrisch auf beiden Seiten der Mittellinie der Fahrzeugkarosserie verteilt und unterhalb der hermetischen Trennwand (4) angeordnet sind, und einem Frontend-Energieabsorptionsmodul (3) besteht, wobei das Frontend-Energieabsorptionsmodul (3) an der hermetischen Trennwand (4) in einer Weise angebracht ist, dass es zu einer Seite der Mittellinie der Fahrzeugkarosserie vorgespannt ist; und
wobei die Mittenend-Kollisionsenergieabsorptionsstruktur eine mittlere Scherkupplung (10), die zum Anbringen unter einem Untergestell des mittleren Wagenkastens geeignet ist, mittlere Energieabsorptionsmodule (11), die zum Anbringen an beiden Seiten einer Stirnwand des mittleren Wagens (14) geeignet sind, und eine mittlere Aufstiegssicherung (12) aufweist, die zum Anbringen an einer Position geeignet ist, die einem Seitenträger entspricht und unterhalb der mittleren Energieabsorptionsmodule (11) liegt, wobei die Länge jedes der mittleren Energieabsorptionsmodule (11) so konfiguriert ist, dass sie sich entlang einer Höhenrichtung der Stirnwand erstreckt.

2. Fahrzeugkarosserie-Kollisionsenergieabsorptionsstruktur nach Anspruch 1, wobei entlang einer Richtung der Mittellinie der Fahrzeugkarosserie ein vorderes Ende der Frontend-Kupplung (1), ein vorderes Ende der Frontend-Aufstiegssicherung (2) und ein vorderes Ende des Frontend-Energieabsorptionsmoduls (3) so konfiguriert sind, dass sie gestaffelt sind; das Fahrerhausskelett und die hermetische Trennwand (4) zum Anbringen an dem Untergestell geeignet sind; und in einer vertikalen Höhenrichtung der Fahrzeugkarosserie das Frontend-Energieabsorptionsmodul (3) symmetrisch an einer Oberseite des Untergestells als Mittelebene angebracht ist oder einen vorgegebenen Versatz relativ zur Oberseite des Untergestells aufweist.

3. Fahrzeugkarosserie-Kollisionsenergieabsorptionsstruktur nach Anspruch 2, wobei das Frontend-Energieabsorptionsmodul (3) ein Gehäuse, eine Rückplatte und einen Energieabsorptionsinnenkern aufweist, der in dem Gehäuse angebracht ist und an der Rückplatte anliegt, wobei das Frontend-Energieabsorptionsmodul (3) durch die Rückplatte an der hermetischen Trennwand (4) angebracht ist.

4. Fahrzeugkarosserie-Kollisionsenergieabsorptionsstruktur nach Anspruch 3, wobei der Versatz des Frontend-Energieabsorptionsmoduls (3) relativ zur Oberseite des Untergestells weniger als oder gleich 20 % einer Höhe der Rückplatte beträgt und die Rückplatte durch Schrauben mit der hermetischen Trennwand (4) verbunden ist.

5. Fahrzeugkarosserie-Kollisionsenergieabsorptionsstruktur nach Anspruch 3, wobei ein Umfang des Gehäuses einen Konuswinkel aufweist und der Konuswinkel von einer Seite der Rückplatte zu einem vorderen Ende des Gehäuses allmählich abnimmt und der Konuswinkel kleiner oder gleich 5 Grad ist.

6. Fahrzeugkarosserie-Kollisionsenergieabsorptionsstruktur nach Anspruch 3, wobei der Energieabsorptionsinnenkern ein Wabenkern ist und eine Achsenrichtung des Wabenkerns parallel oder orthogonal zu einer Fahrtrichtung der Fahrzeugkarosserie vorgesehen ist.

7. Fahrzeugkarosserie-Kollisionsenergieabsorptionsstruktur nach einem der Ansprüche 1 bis 6, wobei ein Anbringungsende der Frontend-Kupplung (1), ein Anbringungsende der Frontend-Aufstiegssicherung (2) und ein Anbringungsende des Frontend-Energieabsorptionsmoduls (3) nicht in derselben Anbringungsebene liegen.

8. Fahrzeugkarosserie-Kollisionsenergieabsorptionsstruktur nach einem der Ansprüche 1 bis 6, wobei die mittleren Energieabsorptionsmodule (11) zum Anbringen an der Stirnwand des mittleren Wagens (14) und zum Anordnen auf beiden Seiten außerhalb eines Durchgangs geeignet sind und jedes der mittleren Energieabsorptionsmodule (11) eine Aluminiumwabe und eine außerhalb der Aluminiumwabe beschichtete Aluminiumplatte aufweist; und
ein Innenraum oder eine Innenseite des mittleren Energieabsorptionsmoduls (11) mit einem Abflussrohr versehen ist.

9. Fahrzeugkarosserie-Kollisionsenergieabsorptionsstruktur nach einem der Ansprüche 1 bis 6, wobei die mittlere Aufstiegssicherung (12) mit einer Führungsstange versehen ist und eine Achse der Führungsstange von einer Mittellinie der mittleren Aufstiegssicherung (12) abweicht.

10. Schienenfahrzeug mit einem Kopfwagen und einem Mittelwagen (14),
wobei der Kopfwagen ein Untergestell, ein Fahrerhaus mit einem Fahrerhausskelett und eine Außenhaut aufweist,
wobei der Mittelwagen ein Untergestell und eine Stirnwand aufweist,
wobei das Schienenfahrzeug eine Fahrzeugkarosserie und die Fahrzeugkarosserie-Kollisionsenergieabsorptionsstruktur gemäß einem der Ansprüche 1 bis 9 aufweist, die an der Fahrzeugkarosserie angebracht ist,
wobei in dem Fall, dass zwei Schienenfahrzeuge in entgegengesetzte Richtungen fahren, das Frontend-Energieabsorptionsmodul (3) jedes der beiden Schienenfahrzeuge auf derselben Seite in einer Fahrtrichtung des Schienenfahrzeugs angeordnet ist.

11. Schienenfahrzeug nach Anspruch 10, wobei ein vorderes Ende des Kopfwagens mit einem Anschlagbalken (15) versehen ist, ein vorderes Ende eines Traktionsbalkens (16) am Untergestell sich erstreckt, um mit dem Anschlagbalken (15) verbunden zu sein, ein unterer Teil des Anschlagbalkens (15) mit Verstärkungsrippen des Frontend-Energieabsorptionsmoduls (3) versehen ist und an einem vorderen Ende des Anschlagbalkens (15) kein Frontend-Boden vorgesehen ist.

## Revendications

1. Structure d'absorption d'énergie en cas de collision de carrosserie de véhicule ferroviaire, comprenant :
une structure d'absorption d'énergie de collision d'extrémité avant adaptée pour être montée au niveau d'une extrémité avant d'un wagon de tête du véhicule ferroviaire,
et une structure d'absorption d'énergie de collision d'extrémité centrale adaptée pour être montée au niveau d'une extrémité d'un wagon central (14) du véhicule ferroviaire,
dans laquelle la structure d'absorption d'énergie de collision d'extrémité avant consiste en une paroi de séparation hermétique (4) adaptée pour être reliée à la fois à une ossature de cabine et un revêtement du wagon de tête, un coupleur d'extrémité avant (1) agencé sous la paroi de séparation hermétique (4) le long d'une ligne centrale de la carrosserie de véhicule, des dispositifs anti-glissement d'extrémité avant (2) répartis symétriquement des deux côtés de l'axe central de la carrosserie de véhicule et situés sous la paroi de séparation hermétique (4), et un module d'absorption d'énergie d'extrémité avant (3), dans laquelle le module d'absorption d'énergie d'extrémité avant (3) est monté sur la paroi de séparation hermétique (4) de manière à être sollicité vers un côté par rapport à la ligne centrale de la carrosserie de véhicule ; et
dans laquelle la structure d'absorption d'énergie de collision d'extrémité centrale inclut un coupleur de cisaillement central (10) adapté pour être monté sous un châssis du wagon central, des modules d'absorption d'énergie centraux (11) adaptés pour être montés des deux côtés d'une paroi d'extrémité du wagon central (14), et un dispositif anti-glissement central (12) adapté pour être monté au niveau d'une position correspondant à une poutre latérale et sous les modules d'absorption d'énergie centraux (11), dans laquelle une longueur de chacun des modules d'absorption d'énergie centraux (11) est configurée pour s'étendre le long d'une direction de hauteur de la paroi d'extrémité.

2. Structure d'absorption d'énergie de collision de carrosserie de véhicule selon la revendication 1, dans laquelle, le long de la direction de la ligne centrale de la carrosserie de véhicule, une extrémité avant du coupleur d'extrémité avant (1), une extrémité avant du dispositif anti-glissement d'extrémité avant (2) et une extrémité avant du module d'absorption d'énergie d'extrémité avant (3) sont configurées pour être décalées ; l'ossature de cabine et la paroi de séparation hermétique (4) sont adaptées pour être montées sur le châssis ; et dans une direction de hauteur verticale de la carrosserie de véhicule, le module d'absorption d'énergie d'extrémité avant (3) est monté symétriquement avec une surface supérieure du châssis comme plan central ou présente un décalage donné par rapport à la surface supérieure du châssis.

3. Structure d'absorption d'énergie de collision de carrosserie de véhicule selon la revendication 2, dans laquelle le module d'absorption d'énergie d'extrémité avant (3) inclut un boîtier, une plaque arrière et un noyau interne d'absorption d'énergie monté dans le boîtier et venant en butée contre la plaque arrière, dans laquelle le module d'absorption d'énergie d'extrémité avant (3) est monté sur la paroi de séparation hermétique (4) à travers la plaque arrière.

4. Structure d'absorption d'énergie de collision de carrosserie de véhicule selon la revendication 3, dans laquelle le décalage du module d'absorption d'énergie d'extrémité avant (3) par rapport à la surface supérieure du châssis est inférieur ou égal à 20 % d'une hauteur de la plaque arrière, et la plaque arrière est reliée à la paroi de séparation hermétique (4) par des boulons.

5. Structure d'absorption d'énergie de collision de carrosserie de véhicule selon la revendication 3, dans laquelle une circonférence du boîtier présente un angle de conicité, et l'angle de conicité diminue progressivement d'un côté de la plaque arrière à une extrémité avant du boîtier, et l'angle de conicité est inférieur ou égal à 5 degrés.

6. Structure d'absorption d'énergie de collision de carrosserie de véhicule selon la revendication 3, dans laquelle le noyau interne d'absorption d'énergie est un noyau en nid d'abeilles, et une direction d'axe du noyau en nid d'abeilles est destinée à être parallèle ou orthogonale à une direction de déplacement de la carrosserie de véhicule.

7. Structure d'absorption d'énergie de collision de carrosserie de véhicule selon l'une quelconque des revendications 1 à 6, dans laquelle une extrémité de montage du coupleur d'extrémité avant (1), une extrémité de montage du dispositif anti-glissement d'extrémité avant (2) et une extrémité de montage du module d'absorption d'énergie d'extrémité avant (3) ne sont pas dans le même plan de montage.

8. Structure d'absorption d'énergie de collision de carrosserie de véhicule selon l'une quelconque des revendications 1 à 6, dans laquelle les modules d'absorption d'énergie centraux (11) sont adaptés pour être montés sur la paroi d'extrémité du wagon central (14) et pour être situés des deux côtés à l'extérieur d'un passage traversant, et chacun des modules d'absorption d'énergie centraux (11) inclut un nid d'abeilles en aluminium et une plaque d'aluminium revêtue à l'extérieur du nid d'abeilles en aluminium ; et
un côté intérieur ou un intérieur du module d'absorption d'énergie central (11) est muni d'un tube de drainage.

9. Structure d'absorption d'énergie de collision de carrosserie de véhicule selon l'une quelconque des revendications 1 à 6, dans laquelle le dispositif anti-glissement central (12) est muni d'une tige de guidage, et un axe de la tige de guidage s'écarte de la ligne centrale du dispositif anti-glissement central (12).

10. Véhicule ferroviaire présentant un wagon de tête et un wagon central (14),
le wagon de tête comprenant un châssis, une cabine avec une ossature de cabine et un revêtement,
le wagon central comprenant un châssis et une paroi d'extrémité,
le véhicule ferroviaire comprenant une carrosserie de véhicule et la structure d'absorption d'énergie de collision de carrosserie de véhicule selon l'une quelconque des revendications 1 à 9 montée sur la carrosserie de véhicule,
dans lequel, dans le cas où deux véhicules ferroviaires se déplacent dans des directions opposées, le module d'absorption d'énergie d'extrémité avant (3) de chacun des deux véhicules ferroviaires est situé du même côté vers une direction de conduite du véhicule ferroviaire.

11. Véhicule ferroviaire selon la revendication 10, dans lequel une extrémité avant du wagon de tête est munie d'une poutre d'arrêt (15), une extrémité avant d'une poutre de traction (16) sur le châssis s'étend pour être reliée à la poutre d'arrêt (15), une partie inférieure de la poutre d'arrêt (15) est munie de nervures de renforcement du module d'absorption d'énergie d'extrémité avant (3), et aucun plancher d'extrémité avant n'est prévu sur une extrémité avant de la poutre d'arrêt (15).
